(19) Europäisches Patentamt
European Patent Office
Office européen des brevets

(11) **EP 3 133 683 A1**

(12) **EUROPEAN PATENT APPLICATION**
published in accordance with Art. 153(4) EPC

(43) Date of publication:
**22.02.2017 Bulletin 2017/08**

(51) Int Cl.:
*H01M 8/02* $^{(2016.01)}$  *B21D 13/02* $^{(2006.01)}$
*H01M 8/10* $^{(2016.01)}$

(21) Application number: **15812466.9**

(22) Date of filing: **04.06.2015**

(86) International application number:
**PCT/JP2015/066204**

(87) International publication number:
**WO 2015/198825 (30.12.2015 Gazette 2015/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.06.2014 JP 2014129307**

(71) Applicant: **Nippon Steel & Sumitomo Metal Corporation**
**Tokyo 100-8071 (JP)**

(72) Inventor: **YOSHIDA, Yuichi**
**Tokyo 100-8071 (JP)**

(74) Representative: **Vossius & Partner**
**Patentanwälte Rechtsanwälte mbB**
**Siebertstrasse 3**
**81675 München (DE)**

(54) **FINE MOLD FOR MOLDING FUEL CELL SEPARATOR, METHOD FOR MANUFACTURING FUEL CELL SEPARATOR, AND FUEL CELL SEPARATOR**

(57) Provided is a fine mold for molding a fuel cell separator by press-molding a metal thin plate for a fuel cell separator to produce the fuel cell separator, comprising: a molding surface in which a concavity and convexity are adjacent to each other with a prescribed period, and (i) an arc-like minute concave surface on an upper surface of the concavity and convexity, and (ii) an arc-like minute convex surface on a lower surface of the concavity and convexity.

**FIG. 1**

EP 3 133 683 A1

**Description**

Technical Field

The present invention relates to a fine mold for molding a fuel cell separator, a method for producing a fuel cell separator using the mold, and a fuel cell separator.

Background Art

These days, polymer electrolyte fuel cells are used for automobiles using electric power as the driving source, small-scale electricity generating systems, and the like. The basic components of the polymer electrolyte fuel cell are electrodes and separators having passages in a fine concave-convex shape that supply fuel gas (reaction gas). The separator is produced by press-molding a metal thin plate using a fine concave-convex mold.

In order to reduce the contact resistance and make it easy for reaction gas (hydrogen and air) to flow, the cross section of the passages of the separator is preferably an acute angle-like rectangular cross section in which the top of the convexity is flat and the standing wall shared between the concavity and convexity is vertical.

As the metal thin plate for a separator, a titanium thin plate or a stainless steel thin plate is usually used from the viewpoints of corrosion resistance and durability; however, it is technically difficult to form concavities and convexities (passages) having the preferred rectangular cross section mentioned above on the metal thin plate using an concave-convex mold while preventing a crack associated with a decrease in the thickness of the metal thin plate and suppressing a "warp" due to elasticity recovery after the press-molding; thus, some technologies of using an concave-convex mold to perform press-processing on a metal thin plate to form concavities and convexities (passages) have been proposed until now.

Patent Literature 1 proposes a method for press-processing a plate material involving forming a plurality of protrusions on a plastically deformable plate material by pressing, the method comprising a first step of using a first press mold to form a protruding portion in a portion where it is intended to form a protrusion and a second step of using a second press mold to push an inside portion that is nearer to the center of the protruding portion than to the peripheral portion of the protruding portion formed in the first step and thereby completing a protrusion.

In the press-processing method of Patent Literature 1, the warp of the plate material after the protrusion formation can be suppressed; but since consideration is not given to forming the standing wall of the protrusion vertically, a protrusion having an acute angle-like rectangular cross section in which the top of the protrusion is flat and the standing wall of the protrusion is vertical cannot be formed.

Patent Literature 2 proposes a method for producing a separator for a polymer electrolyte fuel cell that has a flat portion at the periphery and has convexities and concavities serving as gas passages in a portion excluding the periphery, the method comprising molding a material into a cross-sectional shape of continuously repeated convexities and concavities as preliminary molding and then molding the material into the final cross-sectional shape of repeated convexities and concavities.

However, in the production method of Patent Literature 2, since consideration is not given to making the top of the convexity flat, an acute angle-like rectangular cross section in which the top of the convexity is flat and the standing wall shared between the concavity and convexity is vertical cannot be formed.

Patent Literature 3 proposes an apparatus for producing a separator for a polymer electrolyte fuel cell that has a flat portion at the periphery and has convexities and concavities serving as gas passages in a portion excluding the periphery, in which the clearance c (mm) of the standing wall portion of the concave-convex portion, the radius r (mm) of the shoulder, the depth d (mm) of the groove, and the period of p (mm) of the groove satisfy a prescribed relational expression comprising the plate thickness t (mm) of the material to be processed.

However, even when the production apparatus of Patent Literature 3 is used, an acute angle-like rectangular cross section in which the top of the convexity is flat and the standing wall shared between the concavity and convexity is vertical cannot be formed.

Patent Literature 4 proposes a method for producing a metal separator for a fuel cell, the method comprising, when a metal separator for a fuel cell that has gas passages having a concave-convex cross-sectional form with a draft angle of less than or equal to 50° and an inner radius of less than or equal to 0.5 mm is produced by press-molding on a material plate of a separator in which electrically conductive inclusions protrude on the surface, subjecting the material plate to a primary molding of protrusion-molding the gas passage up to a surface area of more than or equal to 80% of the target surface area of the gas passage, using a mold in which the molding portion of the protruding portion is in a R shape, and then subjecting the material plate to a secondary molding of press-molding the gas passage into the final shape.

However, the production method of Patent Literature 4 is unclear in the final shape of the gas passage, and is not a method of forming a gas passage having an acute angle-like rectangular cross section in which the top of the convexity is flat and the standing wall shared between the concavity and convexity is vertical.

Patent Literature 5 proposes a method for molding passages of metal separators, which are stacked on a cell of a fuel cell and form fuel gas passages and oxidizing gas passages for the cell by means of concavities and convexities molded by pressing, the method comprising a first step in which lengthwise concavities and convexities are formed on a flat plate-like metal plate by press-processing, a second step in which the concave bottom surface of the concavities and convexities formed in the first step is pushed from the outside surface of the concave bottom surface, the convex top surface is pushed from the outside surface of the convex top surface, and thus the concave bottom surface and the convex top surface are formed into a concave curved surface running along the longitudinal direction of the concavities and convexities, and a third step in which the concave bottom surface formed in the second step is pushed from the inside surface of the concave bottom surface, the curved surface of the convex top surface is pushed from the inside surface of the convex top surface, and thus the concave bottom surface and the convex top surface are formed into a flat surface.

In the molding method of Patent Literature 5, after the preliminary molding in the first step, a curved surface is formed on the convexity in the second step, and the curved surface is squashed into a flat shape in the third step; however, the squashing leaves a mark on the surface and the surface is roughened, and consequently an acute angle-like rectangular cross section in which the top of the convexity is flat and the standing wall shared between the concavity and convexity is vertical cannot be formed. Furthermore, in the molding method of Patent Literature 5, since the third step of squashing the curved surface of the convexity is needed, productivity is low.

Patent Literature 6 proposes a method for producing a separator for a polymer electrolyte fuel cell, in which a metallic glass plate material with a thickness of 0.02 to 0.5 mm is prepared, the metallic glass plate material is press-processed in a state of being heated in the supercooled liquid region of the glass transition temperature to the crystallization temperature to form concavities and convexities serving as gas passages, and subsequently a film of an oxide and/or a nitride is formed on the surface on which concavities and convexities have been formed.

The production method of Patent Literature 6 is a method of producing a metallic glass separator, and in Patent Literature 6 only the concave shape of the top is illustrated. Therefore, in the production method of Patent Literature 6, an acute angle-like rectangular cross section in which the top of the convexity is flat and the standing wall shared between the concavity and convexity is vertical cannot be formed.

In Patent Literature 7, there is a description concerning a separator production method in which a separator material is molded to be provided with concavities and convexities to obtain a wavelike cross-sectional form and is then subjected to coining partly, and thereby the occurrence of a crack, a distortion, and a warp is suppressed.

In the production method of Patent Literature 7, the coining process is performed after the molding of obtaining a wavelike cross-sectional form; if it is attempted to perform coining in the first step, the inflow of the material in the cross section stops, and consequently the tension becomes too large and a crack occurs. Hence, a plurality of steps are needed, and production costs are increased. If coining is used for an acute angle-like rectangular cross section in which the angle of the standing wall is vertical or nearly vertical, the tension of the standing wall becomes large during coining molding, and a crack may occur.

Citation List

Patent Literature

Patent Literature 1: JP 2000-317531A
Patent Literature 2: JP 2002-313354A
Patent Literature 3: JP 2004-265856A
Patent Literature 4: JP 2005-243252A
Patent Literature 5: JP 2006-120497A
Patent Literature 6: JP 2007-066817A
Patent Literature 7: JP 2007-48616A

Summary of Invention

Technical Problem

As described above, the cross section of the passages of a separator is preferably an acute angle-like rectangular cross section in which the top of the convexity is flat and the standing wall shared between the concavity and convexity is vertical in order to reduce the contact resistance between the separator and the polymer electrolyte membrane and to make it easy for reaction gas (hydrogen and air) to flow. The reasons are as follows.

The separator is in contact with the polymer electrolyte membrane and functions as an electrode; hence, the contact resistance is preferably low, and to this end it is necessary to make the top of the passage (the convexity) flat and ensure the contact area as large as possible.

Since the separator needs to have a function of supplying reaction gas through the passage uniformly, it is necessary to make the standing wall of the rectangular cross section of the passage vertical and ensure the area of the passage as large as possible. Furthermore, since the fuel cell is a stacked structure, it is necessary to make the standing wall of the passage as vertical as possible and ensure the compressive strength of the separator, and thus configure a stacked structure that is hard to buckle.

However, as described above, it is technically difficult to form concavities and convexities (passages) having the preferred rectangular cross section mentioned above using a concave-convex mold while preventing a crack associated with a decrease in the thickness of the metal thin plate and suppressing a "warp" due to elasticity recovery after the press-molding.

Thus, in view of the present circumstances of the conventional technologies, an issue of the present invention is to, when press-molding a metal thin plate to produce a fuel cell separator using a mold having a molding surface in which a concavity and convexity are adjacent to each other, form concavities and convexities (passages) having an acute angle-like cross section in which the top of the concavities and convexities is flat and the standing wall shared between the concavity and convexity is vertical while preventing a crack associated with a decrease in the thickness of the metal thin plate and suppressing a "warp" due to elasticity recovery after the press-molding; and an object of the present invention is to provide a mold that solves the issue, a method for producing a fuel cell separator using the mold as the upper and lower molds, and a fuel cell separator.

Solution to Problem

The present inventors conducted extensive studies on the method to solve the issue mentioned above. As a result, the present inventors have found that concavities and convexities (passages) having an acute angle-like rectangular cross section in which the top of the convexity is flat and the standing wall shared between the concavity and convexity is vertical can be formed on the metal thin plate while a crack associated with a decrease in the thickness of the metal thin plate is prevented and a "warp" due to elasticity recovery after the press-molding is suppressed when a metal thin plate is press-molded using a mold that has a molding surface in which a concavity and convexity are adjacent to each other and in which an arc-like minute concave surface is formed on the upper surface of the concavities and convexities and an arc-like minute convex surface is formed on the lower surface of the concavities and convexities.

The present invention has been made based on the finding mentioned above, and the gist of the present invention is as follows.

[1] A fine mold for molding a fuel cell separator by press-molding a metal thin plate for a fuel cell separator to produce the fuel cell separator, comprising:

a molding surface in which a concavity and convexity are adjacent to each other with a prescribed period, and

(i) an arc-like minute concave surface on an upper surface of the concavity and convexity, and
(ii) an arc-like minute convex surface on a lower surface of the concavity and convexity.

[2] The fine mold for molding a fuel cell separator according to [1], wherein a depth D of the arc-like minute concave surface satisfies Formula (1) below:

$$0.1 \cdot R < D < R \qquad \cdots (1)$$

R: a curvature radius of a shoulder connecting the upper surface or the lower surface of the concavity and convexity and a vertical surface.

[3] The fine mold for molding a fuel cell separator according to [1] or [2], wherein a height H of the arc-like minute convex surface satisfies Formula (2) below:

$$0.1 \cdot R < H < R \qquad \cdots (2)$$

R: a curvature radius of a shoulder connecting the upper surface or the lower surface of the concavity and convexity and a vertical surface.

[4] The fine mold for molding a fuel cell separator according to [2] or [3], wherein the R satisfies Formula (3) below:

$$R \text{ (mm)} = \alpha \cdot t \qquad \cdots (3)$$

α: a constant
t: a thickness of the metal thin plate for a fuel cell separator.

[5] The fine mold for molding a fuel cell separator according to any one of [1] to [4], wherein the fine mold for molding a fuel cell separator is a press mold.

[6] The fine mold for molding a fuel cell separator according to any one of [1] to [4], wherein the fine mold for molding a fuel cell separator is of a roll type.

[7] A method for producing a fuel cell separator by press-molding a metal thin plate for a fuel cell separator to produce a fuel cell separator,
the method comprising:

(i) performing preliminary molding by press-molding the metal thin plate so that a cross section of the metal thin plate becomes a wavelike form with a prescribed period; and subsequently
(ii) press-molding the metal thin plate having a wavelike cross section with the prescribed period using, as each of upper and lower molds, the fine mold for molding a fuel cell separator according to any one of [1] to [6] having a molding surface in which a concavity and convexity are adjacent to each other with the same period as the prescribed period.

[8] The method for producing a fuel cell separator according to [7], wherein the upper and lower molds are each a press mold.

[9] The method for producing a fuel cell separator according to [7], wherein the upper and lower molds are each of a roll type.

[10] A fuel cell separator produced by the method for producing a fuel cell separator according to any one of [7] to [9], wherein the fuel cell separator has an acute angle-like cross section of a gas passage and does not have a warp.

[11] The fuel cell separator according to [10], wherein the warp provides a warp index Z defined by Formula (4) below of less than or equal to 3.0

$$\text{a warp index } Z = (Hs/L) \times 100 \qquad \cdots (4)$$

Hs: a height of the warp (mm)
L: a length of the separator (mm).

Advantageous Effects of Invention

According to the present invention, there can be provided a fuel cell separator that does not have a "warp," has a high compressive strength, has a small contact resistance with a polymer electrolyte membrane, and can supply reaction gas (hydrogen and air) uniformly.

Brief Description of Drawings

[FIG. 1] FIG. 1 is a diagram showing an embodiment of a molding surface of a fine mold for molding a fuel cell separator.
[FIG. 2] FIG. 2 is a diagram showing change of a cross section of a metal thin plate in a process of producing a fuel cell separator. (a) shows a wavelike cross section with a period of p after press-molding (preliminary molding), and (b) shows a concave-convex cross section with a period of p of the metal thin plate for a fuel cell separator.

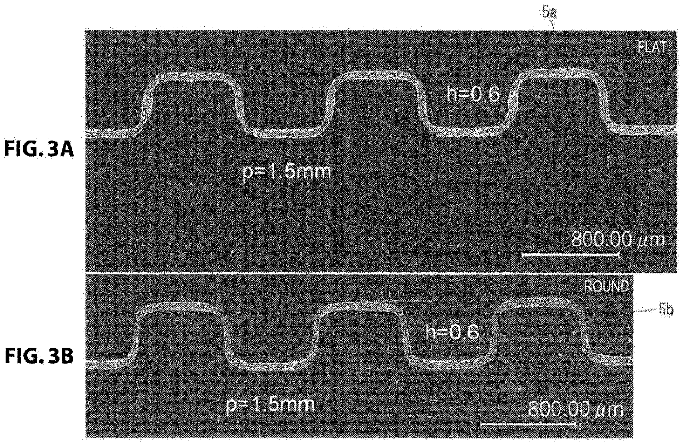

[FIG. 3] FIG. 3 is a diagram showing cross sections of a metal thin plate for a fuel cell separator of the present invention and a conventional metal thin plate for a fuel cell separator. FIG. 3A shows a concave-convex cross section formed by press-molding a metal thin plate having a wavelike cross section with a period of p = 1.5 mm using, as the upper and lower molds, molds each having a molding surface that has an arc-like minute concave surface on the upper surface of concavities and convexities and has an arc-like minute convex surface on the lower surface of the concavities and convexities,

and FIG. 3B shows a concave-convex cross section formed by press-molding a metal thin plate having a wavelike cross section with a period of p = 1.5 mm using, as the upper and lower molds, molds each having a conventional molding surface that does not have an arc-like minute concave surface on the upper surface of concavities and convexities and does not have an arc-like minute convex surface on the lower surface of the concavities and convexities either.

[FIG. 4] FIG. 4 is a diagram showing technical meaning of a warp index.

[FIG. 5] FIG. 5 is a diagram showing concave-convex cross sections of separators produced as examples; FIG. 5A shows a comparative example, and FIG. 5B shows an example of the present invention.

Description of Embodiments

A fine mold for molding a fuel cell separator of the present invention (hereinafter may be referred to as "the present invention mold") is a mold that press-molds a metal thin plate for a fuel cell separator to produce a fuel cell separator, and comprises a molding surface in which a concavity and convexity are adjacent to each other, and

(i) an arc-like minute concave surface on the upper surface of the concavity and convexity, and
(ii) an arc-like minute convex surface on the lower surface of the concavity and convexity.

A method for producing a fuel cell separator of the present invention (hereinafter may be referred to as "the present invention production method") is a method that press-molds a metal thin plate for a fuel cell separator to produce a fuel cell separator, and comprises

(i) press-molding the metal thin plate so that the cross section of the metal thin plate becomes a wavelike form with a prescribed period (preliminary molding), and subsequently
(ii) press-molding the metal thin plate having a cross section in a wavelike form with the prescribed period using, as the upper and lower molds, the present invention molds each having a molding surface in which a concavity and convexity are adjacent to each other with the same period as the prescribed period.

A fuel cell separator of the present invention (hereinafter may be referred to as "the present invention separator") is a fuel cell separator produced by the present invention production method.

First, the present invention mold is described based on the drawing.

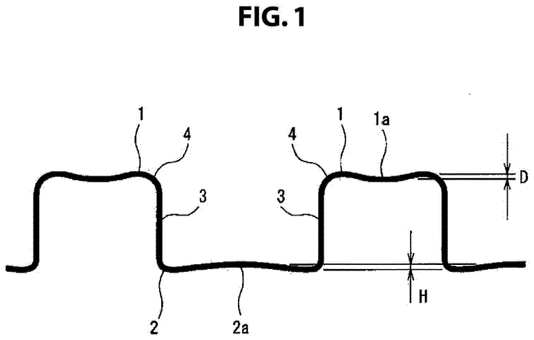

In FIG. 1, an embodiment of the molding surface of a fine mold for molding a fuel cell separator (the present invention mold) is shown. As shown in FIG. 1, on the molding surface of the mold, concavities and convexities that form concave-convex passages on a metal thin plate for a fuel cell separator (hereinafter may simply be referred to as "metal thin plate") are formed adjacent to each other with a prescribed period. That is, on the molding surface of the mold, concavities and convexities are formed with a prescribed period in such a manner that an upper surface 1 and a lower surface 2 of the concavities and convexities are continuously adjacent to each other to a vertical surface 3 via a shoulder 4.

An arc-like minute concave surface 1a is formed on the upper surface 1 of the concavities and convexities of the molding surface, and similarly an arc-like minute convex surface 2a is formed on the lower surface 2 of the concavities and convexities of the processing surface. This is a structural feature of the present invention mold.

The metal thin plate is not particularly limited to a metal thin plate for a special fuel cell separator, but is preferably a titanium thin plate or an austenite-based stainless steel thin plate, for example.

The present inventors have found that, when a metal thin plate that is press-molded to obtain a wavelike cross section in advance is press-processed using molds each having the molding surface shown in FIG. 1 as the upper and lower molds, concavities and convexities (passages) having an acute angle-like rectangular cross section in which the top of the convexity is flat and the standing wall shared between the concavity and convexity is vertical can be formed on the metal thin plate while a crack associated with a decrease in the thickness of the metal thin plate is prevented and a "warp" due to elasticity recovery after the press-molding is suppressed. This is a finding that forms the basis of the present invention mold.

The present inventors surmise that the reason why the present invention mold can form concavities and convexities (passages) having an acute angle-like rectangular cross section while preventing a crack associated with a decrease in the thickness of the metal thin plate and suppressing a "warp" due to elasticity recovery after the press-molding is as follows.

During press-molding, the arc-like minute concave surface formed on the upper surface of the concavities and convexities of the molding surface and the arc-like minute convex surface formed on the lower surface of the concavities and convexities of the processing surface will act so that the plastic flow of the metal thin plate is directed to the standing wall side (the shoulder) and will thus complete plastic deformation. As a result, the upper and lower surfaces will be provided with a uniform compressive strain, and deformation due to elasticity recovery after the press-molding will be suppressed to the utmost; thus, passages having an acute angle-like rectangular cross section can be formed.

In the fine mold having the molding surface shown in FIG. 1 (the present invention mold), the depth D of the arc-like minute concave surface formed on the upper surface of the concavities and convexities of the processing surface preferably satisfies Formula (1) below.

$$0.1 \cdot R < D < R \qquad \cdots(1)$$

R: the curvature radius of the shoulder connecting the upper surface or the lower surface of the concavities and convexities and the vertical surface

If the depth D of the arc-like minute concave surface is less than or equal to "0.1·R", the plastic flow of the metal thin plate does not occur toward the standing wall side (the shoulder), and the top cannot be made flat sufficiently; thus, the depth D is set to more than "0.1·R." The depth D is more preferably more than or equal to "0.2·R".

On the other hand, if the depth D is more than or equal to "R", the thickness of the upper surface of the passage is made non-uniform, or a crack occurs due to excessive squashing; thus, the depth D is set to less than "R." The depth D is more preferably less than or equal to "0.5·R".

In the fine mold having the processing surface shown in FIG. 1 (the present invention mold), the height H of the arc-like minute convex surface formed on the lower surface of the concavities and convexities of the processing surface preferably satisfies Formula (2) below.

$$0.1 \cdot R < H < R \qquad \cdots(2)$$

R: the curvature radius of the shoulder connecting the upper surface or the lower surface of the concavities and convexities and the vertical surface

The reason why the height H of the arc-like minute convex surface is prescribed in the range mentioned above is the same as the reason why the depth D of the arc-like minute concave surface is prescribed in the range mentioned above.

A more preferred range is, as in the case of the depth D of the arc-like minute concave surface, 0.2·R < H < 0.5·R, and also the reason for prescribing the range in this range is the same.

The present inventors have found experimentally that R in Formula (1) and Formula (2) above (the curvature radius of the shoulder connecting the upper surface or the lower surface of the concavities and convexities and the vertical surface) has an appropriate value for the reasons of avoiding a crack of the shoulder and forming a vertical standing wall, and has an optimum range shown by Formula (3) below in relation to the thickness of the metal thin plate.

$$R \, (mm) = \alpha \cdot t \qquad \cdots(3)$$

$\alpha$: a constant
t: the thickness (mm) of the metal thin plate for a fuel cell separator
$\alpha$ is a constant that is determined experimentally, and is 0.5 to 1.5.

Since the thickness of the metal thin plate is usually 50 to 200 $\mu$m, R (mm) is preferably selected in the range of (0.5 to 1.5) $\times$ (0.05 to 0.2) (mm). If $\alpha$ is less than 0.5, a crack of the shoulder is likely to occur; and if $\alpha$ exceeds 1.5, the roundness of the shoulder is made large, and it becomes difficult to obtain a vertical standing wall. $\alpha$ preferably satisfies $\alpha \geq 0.7$ and $\alpha \leq 1.3$.

The present invention mold may be either of a press mold and a roll mold.

Next, a method for producing a fuel cell separator using the fine molds for molding a fuel cell separator as the upper and lower molds is described.

A method for producing a fuel cell separator of the present invention (hereinafter may be referred to as "the present invention production method") is a method that press-molds a metal thin plate for a fuel cell separator to produce a fuel cell separator, and comprises

(i) press-molding the metal thin plate so that the cross section of the metal thin plate becomes a wavelike form with a prescribed period (preliminary molding), and subsequently

(ii) press-molding the metal thin plate having a cross section in a wavelike form with the prescribed period using, as the upper and lower molds, the present invention molds each having a molding surface in which a concavity and convexity are adjacent to each other with the same period as the prescribed period.

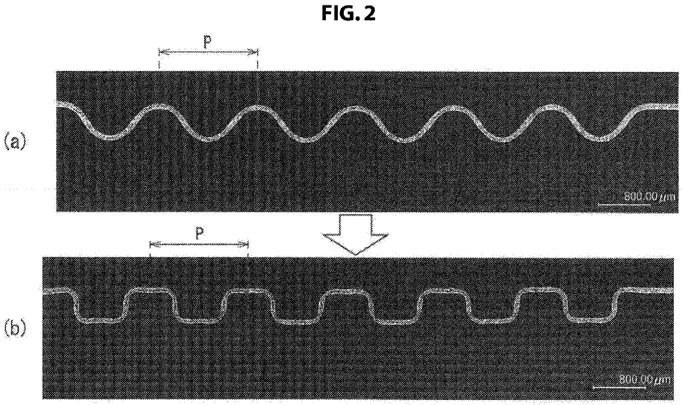

FIG. 2 shows the change of a cross section of a metal thin plate in a process of producing a fuel cell separator. In FIG. 2(a), a wavelike cross section with a period of P after press-molding (preliminary molding) is shown; and in FIG. 2(b), a concave-convex cross section with a period of P of the metal thin plate for a fuel cell separator is shown.

Using a mold having a wavelike molding surface with a prescribed period of P, a metal thin plate for a fuel cell separator is press-molded so as to have the cross section shown in FIG. 2(a) (preliminary molding). Subsequently, the metal thin plate having a wavelike cross section with a period of P is press-molded using, as the upper and lower molds, the present invention molds each having a molding surface in which a concavity and convexity are adjacent to each other with the period of P. The cross section of the press-molded metal thin plate is shown in FIG. 2(b).

Here, in FIG. 3, cross sections of a metal thin plate for a fuel cell separator of the present invention and a conventional metal thin plate for a fuel cell separator are shown. FIG. 3A shows a concave-convex cross section with a height h of 0.6 mm that is formed by press-molding a metal thin plate having a wavelike cross section with a period of p = 1.5 mm using, as the upper and lower molds, molds each having a molding surface that has an arc-like minute concave surface on the upper surface of the concavities and convexities and has an arc-like minute convex surface on the lower surface of the concavities and convexities (the present invention mold).

FIG. 3B shows a concave-convex cross section with a height h of 0.6 mm that is formed by press-molding a metal thin plate having a wavelike cross section with a period of p = 1.5 mm using, as the upper and lower molds, conventional molds each having a molding surface that does not have an arc-like minute concave surface on the upper surface of the concavities and convexities and does not have an arc-like minute convex surface on the lower surface of the concavities and convexities either.

When the concave-convex cross section shown in FIG. 3A and the concave-convex cross section shown in FIG. 3B are compared, it can be seen that an upper surface 5b of the concave-convex cross section shown in FIG. 3B has "roundness" and the concave-convex cross section is generally not in an acute angle-like form, whereas an upper surface 5a of the concave-convex cross section shown in FIG. 3A is "flat" and the concave-convex cross section is generally in an acute angle-like form.

It is surmised that the reason why the upper surface of the concave-convex cross section formed using the present invention molds as the upper and lower molds is "flat" and the concave-convex cross section is in an acute angle-like form is that, as described above, during press-molding, the arc-like minute concave surface formed on the upper surface of the concavities and convexities of the molding surface and the arc-like minute convex surface formed on the lower surface of the concavities and convexities of the processing surface in the present invention mold act so that the plastic flow of the metal thin plate is directed toward the standing wall side (the shoulder) and plastic deformation is thus completed; consequently, the upper and lower surfaces are provided with a uniform compressive strain, and deformation due to elasticity recovery after the press-molding is suppressed to the utmost; thus, an acute angle-like concave-convex cross section is formed.

Furthermore, it is surmised that, since an acute angle-like concave-convex cross section is formed on the entire metal thin plate by the action of the arc-like minute concave surface formed on the upper surface of the concavities and convexities of the molding surface and the arc-like minute convex surface formed on the lower surface of the concavities and convexities of the processing surface, a "warp" due to elasticity recovery after the press-molding is suppressed.

Next, the present invention separator is described. In the present invention separator, since the cross section of the gas passages is an acute angle-like concave-convex cross section, there is generally no "warp," the compressive strength is high, the contact resistance with the polymer electrolyte membrane is small, and reaction gas (hydrogen and air) can be supplied uniformly.

The present inventors have introduced a warp index defined by Formula (4) below in order to evaluate the "warp" of the present invention separator.

$$\text{The warp index } Z = (Hs/L) \times 100 \qquad \cdots(4)$$

Hs: the height of the warp (mm)
L: the length of the separator (mm)

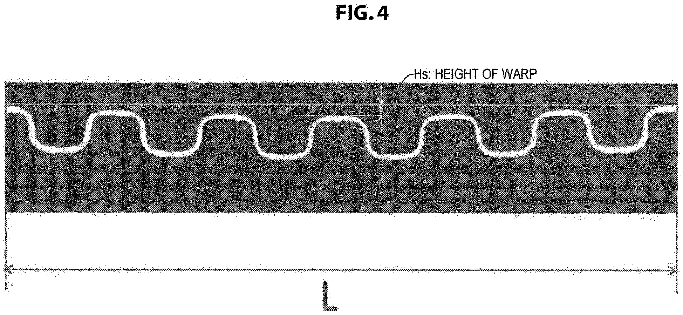

In FIG. 4, the technical meaning of the warp index is shown. As shown in FIG. 4, in a separator in which the length L of one side is warped, the maximum distance of the convex surface of the concave-convex passage from the surface that the four ends of the separator form (shown by the line connecting both ends in the figure) is defined as the height of the warp Hs. As is clear from FIG. 4, the warp index Z is preferably as small as possible.

[Examples]

Next, Examples of the present invention are described; the conditions in Examples are only examples of the conditions used to verify the feasibility and effect of the present invention, and the present invention is not limited to the examples of the conditions. The present invention may use various conditions to the extent that they do not depart from the spirit of the present invention and that the object of the present invention is achieved.

(Examples)

An austenite-based stainless steel foil with a thickness of 100 $\mu$m on which a wavelike cross section with a period of 1.5 mm was formed by ordinary press-molding was press-molded using the molds shown in Table 1 as the upper and lower molds, and thereby concave-convex passages with a height of 0.6 mm were formed; thus, a fuel cell separator was produced. The size of the fuel cell separator was set to 250 mm $\times$ 150 mm, and the size of the concave-convex passage portion was set to 100 mm $\times$ 200 mm.

[Table 1]

| Mold | Concavities and convexities of molding surface, period p: 1.5 mm | | | Thickness of metal thin plate t ($\mu$m) | Notes |
|---|---|---|---|---|---|
| | Depth D of arc-like minute curved surface of upper surface | Height H of arc-like minute curved surface of lower surface | Curvature radius R of shoulder (mm) | | |
| A | 0.03 | 0.03 | 0.10 | 100 | Example |
| B | 0.05 | 0.05 | 0.15 | 150 | Example |
| C | 0 | 0 | 0.10 | 100 | Conventional Example |
| D | 0 | 0 | 0.15 | 150 | Conventional Example |

A cross section of the concave-convex passages of the fuel cell separator was observed visually, and the "warp" was evaluated by the warp index; a sample with Z of less than or equal to 3.0% was evaluated as good, and a sample with Z of more than 3.0% was evaluated as poor. The results are shown in Table 2. The size in the longitudinal direction of the separator of the examples is 250 mm; when the warp index is less than or equal to 3.0%, the height of the warp is less than or equal to 7.5 mm. When the height of the warp is less than or equal to 7.5 mm, separators can be assembled without problems when they are stacked using high tensile bolts and terminal plates having sufficient rigidity.

[Table 2]

| Separator | Thickness $\mu$m | Upper and lower molds | Concave-convex cross section | | | | Warp index Z | Notes |
|---|---|---|---|---|---|---|---|---|
| | | | Upper surface | Lower surface | Standing wall | Whole | | |
| 1 | 100 | A | Flat | Flat | Vertical | Acute angle-like | Good | Example |
| 2 | 150 | B | Flat | Flat | Vertical | Acute angle-like | Good | Example |
| 3 | 100 | C | Round | Round | Oblique | Not acute angle-like | Poor | Conventional Example |
| 4 | 150 | D | Round | Round | Oblique | Not acute angle-like | Poor | Conventional Example |

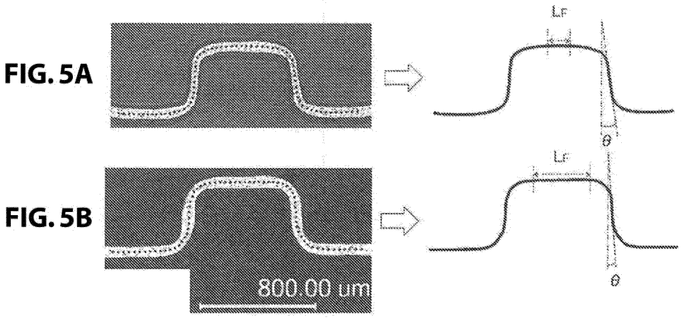

From Table 2, it can be seen that, in Examples, fuel cell separators each having an acute angle-like concave-convex cross section and not having a "warp" have been obtained. The degree of flatness of the upper and lower surfaces and the degree of verticality of the standing wall in the concave-convex cross section were evaluated quantitatively by, as shown in FIG. 5, drawing a center line in the plate thickness in the concave-convex cross section of the separator and using the shape of the center line. For the degree of flatness, the lengths of the flat portions $L_F$ of the upper and lower surfaces were compared; and the $L_F$ of Examples was a length of approximately 2.5 times the $L_F$ of Conventional Examples, and provided a good flat shape. For the height of the standing wall, the angles $\theta$ of the standing wall portions were compared; and the $\theta$ of Examples was lower than the $\theta$ of Conventional Examples by approximately 4 degrees, and provided a good standing wall shape.

Thus, the present invention separator is a fuel cell separator that has a small contact resistance with the polymer electrolyte membrane and can supply reaction gas uniformly.

Industrial Applicability

As described above, the present invention can provide a fuel cell separator that does not have a "warp," has a high compressive strength, has a small contact resistance with a polymer electrolyte membrane, and can supply reaction gas uniformly. When the fuel cell separator is used, the efficiency of the fuel cell is improved; thus, the present invention has high applicability in battery manufacturing industries.

Reference Signs List

| | |
|---|---|
| 1 | upper surface of concavities and convexities |
| 1a | arc-like minute concave surface |
| 2 | lower surface of concavities and convexities |
| 2a | arc-like minute convex surface |
| 3 | vertical surface |
| 4 | shoulder |
| 5a, 5b | upper surface of convexity |
| d | depth of arc-like minute concave surface |
| h | height of arc-like minute convex surface |
| R | curvature radius of shoulder |
| Hs | height of warp |
| L | length of separator |

**Claims**

1. A fine mold for molding a fuel cell separator by press-molding a metal thin plate for a fuel cell separator to produce the fuel cell separator, comprising:

a molding surface in which a concavity and convexity are adjacent to each other with a prescribed period, and

(i) an arc-like minute concave surface on an upper surface of the concavity and convexity, and
(ii) an arc-like minute convex surface on a lower surface of the concavity and convexity.

2. The fine mold for molding a fuel cell separator according to claim 1, wherein a depth D of the arc-like minute concave surface satisfies Formula (1) below:

$$0.1 \cdot R < D < R \qquad\qquad \cdots(1)$$

R: a curvature radius of a shoulder connecting the upper surface or the lower surface of the concavity and convexity and a vertical surface.

3. The fine mold for molding a fuel cell separator according to claim 1 or 2, wherein a height H of the arc-like minute convex surface satisfies Formula (2) below:

$$0.1 \cdot R < H < R \qquad \cdots (2)$$

R: a curvature radius of a shoulder connecting the upper surface or the lower surface of the concavity and convexity and a vertical surface.

4. The fine mold for molding a fuel cell separator according to claim 2 or 3, wherein the R satisfies Formula (3) below:

$$R \ (mm) = \alpha \cdot t \qquad \cdots (3)$$

$\alpha$: a constant
t: a thickness of the metal thin plate for a fuel cell separator.

5. The fine mold for molding a fuel cell separator according to any one of claims 1 to 4, wherein the fine mold for molding a fuel cell separator is a press mold.

6. The fine mold for molding a fuel cell separator according to any one of claims 1 to 4, wherein the fine mold for molding a fuel cell separator is of a roll type.

7. A method for producing a fuel cell separator by press-molding a metal thin plate for a fuel cell separator to produce a fuel cell separator,
the method comprising:

(i) performing preliminary molding by press-molding the metal thin plate so that a cross section of the metal thin plate becomes a wavelike form with a prescribed period; and subsequently
(ii) press-molding the metal thin plate having a wavelike cross section with the prescribed period using, as each of upper and lower molds, the fine mold for molding a fuel cell separator according to any one of claims 1 to 6 having a molding surface in which a concavity and convexity are adjacent to each other with the same period as the prescribed period.

8. The method for producing a fuel cell separator according to claim 7, wherein the upper and lower molds are each a press mold.

9. The method for producing a fuel cell separator according to claim 7, wherein the upper and lower molds are each of a roll type.

10. A fuel cell separator produced by the method for producing a fuel cell separator according to any one of claims 7 to 9, wherein the fuel cell separator has an acute angle-like cross section of a gas passage and does not have a warp.

11. The fuel cell separator according to Claim 10, wherein the warp provides a warp index Z defined by Formula (4) below of less than or equal to 3.0

$$a \ warp \ index \ Z = (Hs/L) \times 100 \qquad \cdots (4)$$

Hs: a height of the warp (mm)
L: a length of the separator (mm).

# FIG. 1

## FIG. 2

**FIG. 3A**

**FIG. 3B**

**FIG. 4**

Hs: HEIGHT OF WARP

L

FIG. 5A

FIG. 5B

## INTERNATIONAL SEARCH REPORT

| International application No. |
|---|
| PCT/JP2015/066204 |

**A. CLASSIFICATION OF SUBJECT MATTER**
*H01M8/02*(2006.01)i, *B21D13/02*(2006.01)i, *H01M8/10*(2006.01)n

According to International Patent Classification (IPC) or to both national classification and IPC

**B. FIELDS SEARCHED**

Minimum documentation searched (classification system followed by classification symbols)
H01M8/02, B21D13/02, H01M8/10

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-120497 A  (Miyoshi Industry Co., Ltd.),<br>11 May 2006 (11.05.2006),<br>claim 1; paragraphs [0007] to [0010], [0020];<br>fig. 7<br>(Family: none) | 1,5–11<br>2–4 |
| A | JP 2007-048616 A  (Toyota Motor Corp.),<br>22 February 2007 (22.02.2007),<br>paragraphs [0066] to [0068]; fig. 5<br>(Family: none) | 1–11 |
| A | JP 2007-294136 A  (Nissan Motor Co., Ltd.),<br>08 November 2007 (08.11.2007),<br>paragraphs [0009], [0023], [0029]; fig. 8 to 10<br>(Family: none) | 1–11 |

☐ Further documents are listed in the continuation of Box C.        ☐ See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    01 September 2015 (01.09.15) | Date of mailing of the international search report<br>    08 September 2015 (08.09.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000317531 A
- JP 2002313354 A
- JP 2004265856 A
- JP 2005243252 A
- JP 2006120497 A
- JP 2007066817 A
- JP 2007048616 A